# EUROPÄISCHE PATENTSCHRIFT

(11) **EP 1 740 634 B1**
(45) Veröffentlichungstag und Bekanntmachung des Hinweises auf die Patenterteilung: **11.08.2010**
(21) Anmeldenummer: 05716916.1
(22) Anmeldetag: 04.03.2005
(51) Int. Cl.: C08G 18/54, C09D 4/06, C08F 283/00, C09D 175/04

(54) **POLYMERZUSAMMENSETZUNGEN VON CARBONYLHYDRIERTEN KETON-ALDEHYDHARZEN UND POLYISOCYANATEN IN REAKTIVEN LÖSEMITTELN**
POLYMER COMPOSITIONS OF CARBONYL-HYDRATED KETONE-ALDEHYDE RESINS AND POLYISOCYANATES IN REACTIVE SOLVENTS
COMPOSITIONS POLYMERES DE RESINES ALDEHYDE-CETONE ET POLYISOCYANATES DANS DES SOLUTIONS REACTIVES

(30) Priorität: 27.04.2004 DE 102004020740
(43) Veröffentlichungstag der Anmeldung: 10.01.2007
(73) Patentinhaber: Evonik Degussa GmbH, 45128 Essen (DE)
(72) Erfinder: GLÖCKNER, Patrick, 45721 Haltern am See (DE); WENNING, Andreas, 48301 Nottuln (DE); DENKINGER, Peter, 48301 Nottuln (DE)
(86) Internationale Anmeldenummer: PCT/EP2005/050976
(87) Internationale Veröffentlichungsnummer: WO 2005/105882

(56) Entgegenhaltungen:
- EP-A- 1 508 582
- GB-A- 1 182 884
- US-A- 4 205 018

## Beschreibung

Die Erfindung betrifft Polymerzusammensetzungen von carbonylhydrierten Keton-Aldehydharzen und Polyisocyanaten in reaktiven Lösemitteln, ein Verfahren zu ihrer Herstellung und die Verwendung, insbesondere in strahlenhärtbaren Beschichtungsstoffen und Klebstoffen.

Strahlenhärtbare Beschichtungsstoffe haben innerhalb der letzten Jahre zunehmend an Bedeutung gewonnen, da u. a. der Gehalt an flüchtigen organischen Verbindungen (VOC) dieser Systeme gering ist.

Die filmbildenden Komponenten sind im Beschichtungsstoff relativ niedermolekular und deshalb niedrigviskos, so dass auf hohe Anteile organischer Lösemittel verzichtet werden kann. Dauerhafte Beschichtungen werden erhalten, indem nach Applikation des Beschichtungsstoffes ein hochmolekulares, polymeres Netzwerk durch z. B. UV-Licht initiierte Vernetzungsreaktionen gebildet wird. Als Folge der Netzwerkbildung kommt es zu einem Volumenschrumpf, der in der Literatur als ein Grund für die teilweise schlechte Haftung von strahlungshärtbaren Beschichlungsstoffen auf unterschiedlichen Substraten angegeben wird [Surface Coatings International Part A, 2003/06, pp. 221-228].

Keton-Aldehydharze werden in Beschichtungsstoffen z. B. als filmbildende Additivharze eingesetzt, um bestimmte Eigenschaften wie Antrocknungsgeschwindigkeit, Glanz, Härte oder Kratzfestigkeit zu verbessern. Wegen ihres relativ geringen Molekulargewichtes besitzen übliche Keton-Aldehydharze eine geringe Schmelz- und Lösungsviskosität und dienen daher in Beschichtungsstoffen u. a. als filmbildende Funktionsfüllstoffe.

DE 23 45 624, EP 736 074, DE 28 47 796, DD 24 0318, DE 24 38 724, JP 09143396 beschreiben die Verwendung von Keton-Aldehyd- und Ketonharzen, z. B. Cyclohexanon-Formaldehydharzen in strahlenhärtbaren Systemen.

EP 902 065 beschreibt die Verwendung von Harzen aus Harnstoff(derivaten), Ketonen oder Aldehyden als Zusatzkomponente im Gemisch mit strahlungshärtbaren Harzen.

DE 24 38 712 beschreibt strahlungshärtende Druckfarben aus filmbildenden Harzen, Keton- und Keton-Formaldehydharzen sowie polymerisierbaren Komponenten wie polyfunktionellen Acrylatestern mehrwertiger Alkohole.

US 4,070,500 beschreibt die Verwendung nicht-strahlungshärtbarer Keton-Formaldehyd-Harze als filmbildende Komponente in strahlungshärtbaren Tinten.

Den Produkten der erwähnten Veröffentlichungen ist gemein, dass sie Carbonylgruppen tragen. Carbonylgruppen unterliegen durch z. B. Bestrahlung klassischen Abbaureaktionen wie z. B. vom Norrish-Typ I oder II [Laue, Plagens, Namen und Schlagwort-Reaktionen, Teubner Studienbücher, Stuttgart, 1995].

Die Verwendung nicht modifizierter Keton-Aldehyd oder Ketonharze ist daher für qualitativ hochwertige Anwendungen z. B. im Außenbereich, bei dem hohe Beständigkeitseigenschaften insbesondere gegenüber Bewitterung und Hitze erforderlich sind, nicht möglich

Man verbessert diese Eigenschaften durch die Umwandlung der Carbonylgruppen in sekundäre Alkoholgruppen durch Hydrierung von Keton-Aldehydharzen. Dies wird seit langem praktiziert (DE-PS 8 70 022). Ein typisches und bekanntes Produkt ist Kunstharz SK der Degussa AG. Die Verwendung carbonylhydrierter sowie kernhydrierter Keton-Aldehydharze auf Basis von aromatischen Ketonen ist ebenfalls möglich. Ein solches Harz wird in DE 33 34 631 beschrieben. Die OH-Zahl derartiger Produkte ist mit über 200 mg KOH/g sehr hoch.

Durch Strahlung induziert vernetzbare, carbonylhydrierte Keton-Aldehydharze werden beschrieben in DE-Anmeldung 103 38 562.2 und 103 38 560.6. Aufgrund des relativ geringen Molekulargewichtes besitzen diese Harze einen vergleichsweise geringen Schmelzbereich zwischen 90 und 140 °C. Insbesondere bei pigmentierten Lacken oder aber in Schattenbereichen von dreidimensionalen Substraten ist ein hoher Erweichungsbereich jedoch wünschenswert, da eine Klebfreiheit bei relativ geringem Vernetzungsgrad erhalten werden kann.

Aufgabe der vorliegenden Erfindung war es, Polymerzusammensetzungen zu finden, die sich als Haftungsverbesserer in strahlungshärtbaren Kleb- und Beschichtungsstoffen eignen.

Überraschender Weise konnte diese Aufgabe gelöst werden, indem in strahlungshärtbaren Beschichtungsstoffen Polymerzusammensetzungen, die in einem strahlungsreaktiven Lösemittel gelöst sind, verwendet werden, die aus den Umsetzungsprodukten von carbonylhydrierten Keton-Aldehydharzen und Di- oder Polyisocyanaten mit einem Schmelzbereich oberhalb von 140 °C bestehen.

Als Polymerzusammensetzungen wurden dabei durch Zugabe von einem strahlungsreaktiven Lösemittel carbonylhydrierte Keton-Aldehydharze chemisch derart modifiziert, wodurch an sich strahlungsinerte, d. h. nicht vernetzbare und lagerstabile Harze in einem strahlungsreaktiven Lösemittel resultieren. Die carbonylhydrierte Keton-Aldehydharze sind außerdem verseifungsstabil und widerstandsfähig gegen Chemikalien, und besitzen eine hohe Vergilbungsbeständigkeit Die Polymerzusammensetzungen erzeugen in strahlungsinduzierten vernetzbaren Beschichtungsstoffen oder Klebstoffen eine gute Haftung zu unterschiedlichen Untergründen wie z. B. Metallen, Kunststoffen wie z. B. Polyethylen, Polypropylen oder Polycarbonat bei gleichzeitig hoher Härte.

Gegenstand der Erfindung sind Polymerzusammensetzungen, im Wesentlichen enthaltend
A) mindestens ein strahlungsreaktives Lösemittel
   und das Umsetzungsprodukt mit einem Schmelzbereich oberhalb von 140 °C von
B) mindestens einem carbonylhydrierten Keton-Aldehydharz
   mit
C) mindestens einem aromatischen, aliphatischen und/oder cycloaliphatischen Di- oder
   Polyisocyanat

Gegenstand der Erfindung ist auch die Verwendung von Polymerzusammensetzungen, im Wesentlichen enthaltend
A) mindestens ein strahlungsreaktives Lösemittel
   und das Umsetzungsprodukt mit einem Schmelzbereich oberhalb von 140 °C von
B) mindestens einem carbonylhydrierten Keton-Aldehydharz
   mit
C) mindestens einem aromatischen, aliphatischen und/oder cycloaliphatischen Di- oder Polyisocyanat
als Hauptkomponente, Basiskomponente oder Zusatzkomponente in insbesondere strahlungshärtenden Beschichtungsstoffen, Klebstoffen, Druckfarben und Tinten, Polituren, Lasuren, Pigmentpasten, Spachtelmassen, Kosmetikartikeln und/oder Dicht- und Dämmstoffen, insbesondere zur Verbesserung der Haftungseigenschaften und der Härte.

Als Komponente A) können prinzipiell alle bei Raumtemperatur flüssigen Verbindungen eingesetzt werden, die über ungesättigte Gruppierungen verfügen, die der radikalischen Vernetzungsreaktion zugänglich sind.

Bevorzugt als Komponente A) einsetzbare Lösemittel sind Acrylsäure und/oder Methacrylsäure, C₁-C₄₀-Alkylester und/oder Cycloalkylester der Methacrylsäure und/oder Acrylsäure, Glycidylmethacrylat, Glycidylacrylat, 1,2-Epoxybutylacrylat, 1,2-Epoxybutylmethacrylat, 2,3-Epoxycyclopentylacrylat, 2,3-Epoxycyclopentylmethacrylat sowie die analogen Amide, wobei auch Styrol und/oder dessen Derivate zugegen sein können.

Besonders bevorzugt sind Phenoxyethylacrylat, Ethoxyethoxyethylacrylat, Isodecylacrylat und Isobornylacrylat.

Eine weitere bevorzugte Klasse von strahlungsreaktiven Lösemitteln als Komponente A) sind Di- Tri- und/oder Tetraacrylate und deren Methacrylanaloga, die sich formal aus den Umsetzungsprodukten von Acrylsäure bzw. Methacrylsäure und einer Alkoholkomponente unter Wasserabspaltung ergeben. Als dafür gebräuchliche Alkoholkomponente werden z. B. Ethylenglykol, 1,2-, 1,3-Propandiol, Diethylen-, Di- und Tripropylen-, Triethylen-, Tetraethylenglykol, 1,2-, 1,4-Butandiol, 1,3-Butylethylpropandiol, 1,3-Methylpropandiol, 1,5-Pentandiol, Bis-(1,4-hydroxymethyl)cyclohexan (Cylohexandimethanol), Glycerin, Hexandiol, Neopentylglykol, Trimethylolethan, Trimethylolpropan, Pentaerythrit, Bisphenol A, B, C, F, Norbornylenglykol, 1,4-Benzyldimethanol, -ethanol, 2,4-Dimethyl-2-ethylhexan-1,3-diol, 1,4- und 2,3-Butylenglykol, Di-β-hydroxyethylbutandiol, 1,5-Pentandiol, 1,6-Hexandiol, 1,8-Octandiol, Decandiol, Dodecandiol, Cyclohexandiol, Trimethylolpropan, 3(4),8(9)-Bis(hydroxymethyl)-tricyclo[5.2.1.0^{2,6}]decan (Dicidol), 2,2-Bis-(4-hydroxycyclohexyl)propan, 2,2-Bis-[4-(β-hydroxyethoxy)phenyl]propan, 2-Methylpropandiol-1,3, 2-Methylpentandiol-1,5, 2,2,4(2,4,4)-Trimethylhexandiol-1,6, Hexantriol-1,2,6, Butantriol-1,2,4, Tris-(β-hydroxyethyl)isocyanurat, Mannit, Sorbit, Polypropylenglykole, Polybutylenglykole, Xylylenglykol oder Hydroxypivalinsäureneopentylglykolester, allein oder in Mischungen, eingesetzt.

Besonders bevorzugt sind jedoch Dipropylenglykoldiacrylat (DPGDA) und/oder Tripropylenglykoldiacrylat (TPGDA), Hexandioldiacrylat (HDDA), Trimethylolpropantriacrylat, allein oder in Mischung.

Im Allgemeinen können aber alle in der Literatur für strahlungshärtbare Lacke als geeignet genannte Reaktivverdünner eingesetzt werden.

Als Ketone zur Herstellung der carbonylhydrierten Keton-Aldehydharze (Komponente B)) eignen sich alle Ketone, insbesondere Aceton, Acetophenon, 4-tert.-Butylmethylketon, Methylethylketon, Heptanon-2, Pentanon-3, Methylisobutylketon, Cyclopentanon, Cyclododecanon, Mischungen aus 2,2,4- und 2,4,4-Trimethylcyclopentanon, Cycloheptanon und Cyclooctanon, Cyclohexanon und alle alkylsubstituierten Cyclohexanone mit einem oder mehreren Alkylresten, die insgesamt 1 bis 8 Kohlenstoffatome aufweisen, einzeln oder in Mischung. Als Beispiele alkylsubstituierter Cyclohexanone können 4-tert.-Amylcyclohexanon, 2-sek.-Butylcyclohexanon, 2-tert.-Butylcyclohexanon, 4-tert.-Butylcyclohexanon, 2-Methylcyclohexanon und 3,3,5-Trimethylcyclohexanon genannt werden.

Im Allgemeinen können aber alle in der Literatur für Ketonharzsynthesen als geeignet genannte Ketone, in der Regel alle C-H-aciden Ketone, eingesetzt werden. Bevorzugt werden carbonylhydrierte Keton-Aldehydharze auf Basis der Ketone Acetophenon, 4-tert.-Butylmethylketon, Cyclohexanon, 4-tert.-Butylcyclohexanon, 3,3,5-Trimethylcyclohexanon und Heptanon allein oder in Mischung.

Als Aldehyd-Komponente der carbonylhydrierten Keton-Aldehydharze (Komponente B)) eignen sich prinzipiell unverzeigte oder verzweigte Aldehyde, wie z. B. Formaldehyd, Acetaldehyd, n-Butyraldehyd und/oder iso-Butyraldehyd, Valerianaldehyd sowie Dodecanal. Im Allgemeinen können alle in der Literatur für Ketonharzsynthesen als geeignet genannten Aldehyde eingesetzt werden. Bevorzugt wird jedoch Formaldehyd allein oder in Mischungen verwendet.

Das benötigte Formaldehyd wird üblicherweise als ca. 20 bis 40 Gew.-%ige wässrige oder alkoholische (z. B. Methanol oder Butanol) Lösung eingesetzt. Andere Einsatzformen des Formaldehyds wie z. B. auch die Verwendung von para-Formaldehyd oder Trioxan sind ebenfalls möglich. Aromatische Aldehyde, wie z. B. Benzaldehyd, können in Mischung mit Formaldehyd ebenfalls enthalten sein.

Besonders bevorzugt werden als Ausgangsverbindungen für die Komponente B) carbonylhydrierte Harze aus Acetophenon, 4-tert.-Butylmethylketon, Cyclohexanon, 4-tert.-Butylcyclohexanon, 3,3,5-Trimethylcyclohexanon sowie Heptanon allein oder in Mischung und Formaldehyd eingesetzt.

Die Harze aus Keton und Aldehyd werden in Gegenwart eines Katalysator mit Wasserstoff bei Drücken von bis zu 300 bar hydriert. Dabei wird die Carbonylgruppe des Keton-Aldehydharzes in eine sekundäre Hydroxygruppe umgewandelt. Je nach Reaktionsbedingungen kann ein Teil der Hydroxygruppen abgespalten werden, so dass Methylengruppen resultieren. Zur Veranschaulichung dient folgendes Schema:

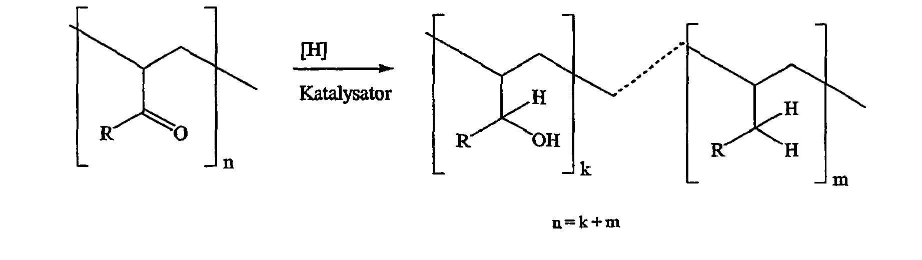

Als Komponente C) geeignet sind aromatische, aliphatische und/oder cycloaliphatische Di- und/oder Polyisocyanate.

Beispiele für Diisocyanate sind Cyclohexandiisocyanat, Methylcyclohexandiisocyanat, Ethylcyclohexandiisocyanat, Phenylendiisocyanat, Propylcyclohexandiisocyanat, Methyldiethylcyclohexandiisocyanat Toluylendiisocyanat, Bis(isocyanatophenyl)methan, Propandiisocyanat, Butandiisocyanat, Pentandiisocyanat, Hexandiisocyanat, wie Hexamethylendiisocyanat (HDI) oder 1,5-Diisocyanato-2-methylpentan (MPDI), Heptandiisocyanat, Octandiisocyanat, Nonandiisocyanat, wie 1,6-Diisocyanato-2,4,4-trimethylhexan oder 1,6-Diisocyanato-2,2,4-trimethylhexan (TMDI), Nonantriisocyanat, wie 4-Isocyanatomethyl-1,8-octandiisocyanat (TIN), Dekandi- und triisocyanat, Undekandi- und - triisocyanat, Dodecandi- und -triisocyanate, Isophorondiisocyanat (IPDI), Bis(isocyanatomethylcyclohexyl)methan (H₁₂MDI), Isocyanatomethylmethylcyclohexyl-isocyanat, 2,5(2,6)-Bis(isocyanato-methyl)bicyclo[2.2.1]heptan (NBDI), 1,3-Bis(isocyanatomethyl)cyclohexan (1,3-H₆-XDI) oder 1,4-Bis(isocyanatomethyl)cyclohexan (1,4-H₆-XDI), allein oder in Mischung.

Eine andere bevorzugte Klasse von Polyisocyanaten als Komponente C) sind die durch Dimerisierung, Trimerisierung, Allophanatisierung, Biuretisierung und/oder Urethanisierung der einfachen Diisocyanate hergestellten Verbindungen mit mehr als zwei Isocyanatgruppen pro Molekül, beispielsweise die Umsetzungsprodukte dieser einfachen Diisocyanate, wie z. B. IPDI, TMDI, HDI und/oder H₁₂MDI mit mehrwertigen Alkoholen (z. B. Glycerin, Trimethylolpropan, Pentaerythrit) bzw. mehrwertigen Polyaminen, oder die Triisocyanurate, die durch Trimerisierung der einfachen Diisocyanate, wie beispielsweise IPDI, HDI und H₁₂MDI, erhältlich sind

Gegebenenfalls kann ein geeigneter Katalysator zur Herstellung der Harze aus B + C eingesetzt werden. Geeignet sind alle in der Literatur bekannten Verbindungen, die eine OH-NCO-Reaktion beschleunigen, wie z. B. Diazabicyclooctan (DABCO) oder Dibutylzinndilaurat (DBTL).

Es ist auch möglich, einen Teil der carbonylhydrierten Keton-Aldehydharze B) durch weitere hydroxyfunktionelle Polymere D) wie z. B. hydroxyfunktionelle Polyether, nicht hydrierte und/oder kernhydrierte Phenol-Aldehydharze, Polyester und/oder Polyacrylate zu ersetzen. Dabei können direkt Mischungen dieser Polymere D) mit der Komponente B) polymeranalog mit Komponente C) umgesetzt werden. Im Gegensatz zu den "reinen" carbonylhydrierten Keton-Aldehydharzen B) können hierdurch Eigenschaften, wie z. B. Flexibilität, Härte noch besser eingestellt werden. Die weiteren hydroxyfunktionellen Polymere besitzen in der Regel Molekulargewichte Mn zwischen 200 und 10 000 g/mol, bevorzugt zwischen 300 und 5 000 g/mol.

Der Schmelzbereich des Umsetzungsproduktes von B) und C) liegt oberhalb von 140 °C, bevorzugt oberhalb von 145 °C, besonders bevorzugt oberhalb von 150 °C.

Die Mengen von B) und C) werden so gewählt, dass 1 mol des carbonylhydrierten Keton-Aldehydharzes (Komponente B) bezogen auf Mₙ, und 0,2 bis 15 mol, bevorzugt 0,25 bis 10 mol, besonders 0,3 bis 4 mol der Komponenten C) eingesetzt werden.

Die Menge von A) und dem Umsetzungsprodukt von B) und C) und gegebenenfalls D wird so gewählt, dass der Massenanteil dieses Umsetzungsproduktes aus B), C) und ggf. D) zwischen 99 und 1 %, bevorzugt zwischen 90 und 20 % und besonders bevorzugt zwischen 80 und 25 % liegt.

Gegenstand der Erfindung ist auch ein Verfahren zur Herstellung von Polymerzusammensetzungen, im Wesentlichen enthaltend
A) mindestens ein strahlungsreaktives Lösemittel und das Umsetzungsprodukt mit einem Schmelzbereich oberhalb von 140 °C von
B) mindestens einem carbonylhydrierten Keton-Aldehydharz mit
C) mindestens einem aromatischen, aliphatischen und/oder cycloaliphatischen Di- oder Polyisocyanat,
   und gegebenenfalls
D) mindestens einem weiteren hydroxyfunktionalisierten Polymer, durch Umsetzung von B) und C) in A), bei Temperaturen von 20 bis 150 °C.

In einem bevorzugten Herstellverfahren I
wird zu der Lösung des carbonylhydrierten Keton-Aldehydharzes B) in dem Reaktivverdünner A) die Komponente C), ggf. in Anwesenheit eines geeigneten Katalysators, zugegeben.

Je nach Reaktivität der Komponente C) wird die Temperatur der Umsetzung gewählt. Es haben sich Temperaturen zwischen 30 und 150 °C, bevorzugt zwischen 50 und 140 °C bewahrt Die Reaktion findet aber auch weniger bevorzugt bei Raumtemperatur statt.

Es hat sich als vorteilhaft erwiesen, 1 mol des carbonylhydrierten Keton-Aldehydharzes - bezogen auf Mₙ- mit 0,2 bis 15 mol, bevorzugt 0,25 bis 10 mol, besonders 0,3 bis 4 mol der Isocyanat-Komponente C) zur Reaktion zu bringen.

In einem bevorzugten Herstellverfahren II
wird zu der Lösung des carbonylhydrierten Keton-Aldehydharzes B) in dem Reaktivverdünner A) und dem hydroxyfunktionellen Polymer (Komponente D)), wie z. B. Polyether, nicht hydrierte und/oder kernhydrierte Phenol-Aldehydharze, Polyester und/oder Polyacrylat die Komponente C) ggf. in Anwesenheit eines geeigneten Katalysators zugegeben.

Je nach Reaktivität der Komponente C) wird die Temperatur der Umsetzung gewählt Es haben sich Temperaturen zwischen 30 und 150 °C, bevorzugt zwischen 50 und 140 °C bewährt. Es ist auch möglich, die Reaktion weniger bevorzugt bei Raumtemperatur stattfinden zu lassen.

Es hat sich als vorteilhaft erwiesen, 1 mol der Komponente A) und/oder zusätzlicher Polymere, bezogen auf Mₙ, mit 0,2 bis 15 mol, bevorzugt 0,25 bis 10 mol, besonders 0,3 bis 4 mol der Komponente C) zur Reaktion zu bringen.

Die folgenden Beispiele sollen die gemachte Erfindung weiter erläutern aber nicht ihren Anwendungsbereich beschränken:
**Beispiel 1:**
   Die Synthese erfolgt, indem 400 g Kunstharz SK (Degussa AG; hydriertes Harz aus Acetophenon und Formaldehyd, OHZ = 240 mg KOH/g (Acetanhydridmethode), Mn ~ 1000 g/mol (GPC gegen Polystyrol als Standard), Schmelzbereich 114 - 120 °C) mit 90 g Vestanat IPDI (Degussa AG) in Anwesenheit von 0,2 % (auf Harz) 2,6-Bis(tert.-butyl)-4-methylphenol (Ralox BHT, Degussa AG) und 0,1 % Dibutylzinndilaurat (auf Harz, 65%ig in TPGDA) in 40%iger Verdünnung mit TPGDA in einem Dreihalskolben mit Rührer, Rückflusskühler und Thermofühler in Stickstoffatmosphäre solange bei 80°C zur Reaktion gebracht werden, bis eine NCO-Zahl von kleiner 0,1 erreicht ist Es wird eine helle, klare Lösung mit einer dynamischen Viskosität von 8,85 Pa·s erhalten. Die Farbzahl nach Gardner der Lösung beträgt 0,3. Nach Lagerung bei 60 °C über 14 Tage beträgt die Farbzahl nach Gardner 0,6, was für derartige Harze einer hohen Vergilbungsbeständigkeit entspricht
**Beispiel 2 zur Ermittlung des Schmelzbereiches:**
   Die Synthese erfolgt, indem 400 g Kunstharz SK (Degussa AG; hydriertes Harz aus Acetophenon und Formaldehyd, OHZ = 240 mg KOH/g (Acetanhydridmethode), Mn ~ 1000 g/mol (GPC gegen Polystyrol als Standard), Schmelzbereich 114 - 120°C) mit 90 g Vestanat IPDI (Degussa AG) in Anwesenheit von 0,2 % (auf Harz) 2,6-Bis(tert.-butyl)-4-methylphenol (Ralox BHT, Degussa AG) und 0,1 % Dibutylzinndilaurat (auf Harz, 65%ig in Aceton) in 40%iger Verdünnung mit Aceton in einem Dreihalskolben mit Rührer, Rückflusskühler und Thermofühler in Stickstoffatmosphäre solange unter Rückfluss zur Reaktion gebracht werden, bis eine NCO-Zahl von kleiner 0,1 erreicht ist. Nach Abtrennen des Acetons wird ein farbloses Pulver erhalten, das einen Schmelzbereich von 171 bis 176 °C besitzt.

### Anwendungsbeispiele

Als Basisharz (UV 20) diente ein Addukt aus Trimethylolpropan, IPDI, Terathane 650 sowie Hydroxyethylacrylat, 70%ig gelöst in TPGDA, Viskosität 23 °C = 20,9 Pas.

Zum Vergleich wurde Kunstharz SK untersucht.

| Lack-Nr. | A | B | C |
|---|---|---|---|
| UV 20 | 100 | 60 | 60 |
| Kunstharz SK | - | 40 | - |
| Harz aus Beispiel 1 | - | - | 100 |
| TPGDA | 40 | 64 | 4 |

Die Harzlösungen A, B und C wurden mit Darocur 1173 (Ciba Specialty Chemicals, 1,5 % bez. auf Festharz) versehen, mit einem Rakel auf eine Glasplatte aufgetragen. Dann wurden die Filme mittels UV-Licht (Quecksilber-Mitteldruck-Lampe, 70 W / optischer Filter 350 nm) ca. 16 sec. lang ausgehärtet. Die zuvor löslichen Filme sind nicht mehr löslich in Methylethylketon.

| **Lack-Nr.** | **SD** [µ] | **ET** [mm] | **HK** [s] | P**eugeot Test** | **MEK-Test** [Doppelhübe] | **Verlauf** |
|---|---|---|---|---|---|---|
| A | 30-37 | 7 | 115 | ++ | >150 | leicht unruhige Oberfläche |
| B | 30-33 | 6 | 163 | ++ | >150 | Guter Verlauf |
| C | 30-36 | 6,5 | 192 | ++ | >150 | Guter Verlauf |

### Gitterschnittprüfung auf unterschiedlichen Substraten

| **Lack-Nr.** | **ABS** | **PC** | **PE** | **PP** | **PS** | **Metall** |
|---|---|---|---|---|---|---|
| A | 1 | 4 | 4 | 5 | 4 | 2 |
| B | 0 | 1 | 4 | 4 | 4 | 0 |
| C | 0 | 0 | 3 | 3 | 1 | 0 |

| | | | | | | |
|---|---|---|---|---|---|---|
| 0 = keine Enthaftung; 5 = vollständiger Haftungsverlust | | | | | | |

### Abkürzungen

ABS: Acrylnitril-Butadien-Styrol-Copolymer
ET: Erichsentiefung
HK: Pendelhärte nach König
MEK-Test: Beständigkeit gegenüber Butanon
PC : Polycarbonat
PE: Polyethylen
Peugeot-Test Superbenzinbeständigkeit
PP: Polypropylen
PS: Polystyrol
SD : Schichtstärke

## Patentansprüche

1. Polymerzusammensetzungen, im Wesentlichen enthaltend
A) mindestens ein strahlungsreaktives Lösemittel
und das Umsetzungsprodukt mit einem Schmelzbereich oberhalb von 140 °C von
B) mindestens einem carbonylhydrierten Keton-Aldehydharz
mit
C) mindestens einem aromatischen, aliphatischen und/oder cycloaliphatischen Di- oder
Polyisocyanat.

2. Polymerzusammensetzungen nach Anspruch 1,
**dadurch gekennzeichnet,**
**dass** als Komponente A) Verbindungen mit ungesättigten Gruppierungen eingesetzt werden.

3. Polymerzusammensetzungen nach mindestens einem der vorherigen Ansprüche,
**dadurch gekennzeichnet,**
**dass** als Komponente A) Acrylsäure und/oder Methacrylsäure, C₁-C₄₀-Alkylester und/oder Cycloalkylester der Methacrylsäure und/oder Acrylsäure, Glycidylmethacrylat, Glycidylacrylat, 1,2-Epoxybutylacrylat, 1,2-Epoxybutylmethacrylat, 2,3-Epoxycyclopentylacrylat, 2,3-Epoxycyclopentylmethacrylat sowie die analogen Amide und/oder Styrol und/oder deren Derivate, allein oder in Mischungen, enthalten sind.

4. Polymerzusammensetzungen nach mindestens einem der vorherigen Ansprüche,
**dadurch gekennzeichnet,**
**dass** als Komponente A) Phenoxyethylacrylat, Ethoxyethoxyethylacrylat, Isodecylacrylat und Isobornylacrylat, allein oder in Mischungen, enthalten sind.

5. Polymerzusammensetzungen nach mindestens einem der vorherigen Ansprüche,
**dadurch gekennzeichnet, dass** als Komponente A) Di-, Tri- und/oder Tetraacrylate und deren Methacrylatanaloga, allein oder in Mischungen, enthalten sind.

6. Polymerzusammensetzungen nach Anspruch 5,
**dadurch gekennzeichnet,**
**dass** als Komponente A) Di-, Tri- und/oder Tetraacrylate und deren Methacrylatanaloga von Ethylenglykol, 1,2-, 1,3-Propandiol, Diethylen-, Di- und Tripropylen-, Triethylen-, Tetraethylenglykol, 1,2-, 1,4-Butandiol, 1,3-Butylethylpropandiol, 1,3-Methylpropandiol, 1,5-Pentandiol, Bis-(1,4-hydroxymethyl)cyclohexan (Cyclohexandimethanol), Glycerin, Hexandiol, Neopentylglykol, Trimethylolethan, Trimethylolpropan, Pentaerythrit, Bisphenol A, B, C, F, Norbomylenglykol, 1,4-Benzyldimethanol, -ethanol, 2,4-Dimethyl-2-ethylhexan-1,3-diol, 1,4- und 2,3-Butylenglykol, Di-β-hydroxyethylbutandiol, 1,5-Pentandiol, 1,6-Hexandiol, 1,8-Octandiol, Decandiol, Dodecandiol, Cyclohexandiol, Trimethylolpropan, 3(4),8(9)-Bis(hydroxymethyl)-tricyclo[5.2.1.0^{2,6}]decan (Dicidol), 2,2-Bis-(4-hydroxycyclohexyl)propan, 2,2-Bis-[4-(β-hydroxyethoxy)phenyl]propan, 2-Methylpropandiol-1,3, 2-Methylpentandiol-1,5, 2,2,4(2,4,4)-Trimethylhexandiol-1,6, Hexantriol-1,2,6, Butantriol-1,2,4, Tris-(β-hydroxyethyl)isocyanurat, Mannit, Sorbit, Polypropylenglykole, Polybutylenglykole, Xylylenglykol oder Hydroxypivalinsäureneopentylglykolester, allein oder in Mischungen, enthalten sind.

7. Polymerzusammensetzungen nach mindestens einem der Ansprüche 5 oder 6,
**dadurch gekennzeichnet,**
**dass** Di- und/oder Tripropylenglykoldiacrylat, Hexandioldiacrylat, Trimethylolpropantriacrylat, allein oder in Mischung, enthalten sind.

8. Polymerzusammensetzungen nach mindestens einem der vorherigen Ansprüche,
**dadurch gekennzeichnet,**
**dass** C-H-acide Ketone in der Komponente B) eingesetzt werden.

9. Polymerzusammensetzungen nach mindestens einem der vorherigen Ansprüche,
**dadurch gekennzeichnet,**
**dass** in den carbonylhydrierten Keton-Aldehydharzen der Komponente B), Ketone ausgewählt aus Aceton, Acetophenon, 4-tert.-Butylmethylketon, Methylethylketon, Heptanon-2, Pentanon-3, Methylisobutylketon, Cyclopentanon, Cyclododecanon, Mischungen aus 2,2,4- und 2,4,4-Trimethylcyclopentanon, Cycloheptanon, Cyclooctanon, Cyclohexanon, allein oder in Mischungen, als Ausgangsverbindungen, eingesetzt werden.

10. Polymerzusammensetzungen nach mindestens einem der vorherigen Ansprüche,
**dadurch gekennzeichnet,**
**dass** in den carbonylhydrierten Keton-Aldehydharzen der Komponente B) alkylsubstituierte Cyclohexanone mit einem oder mehreren Alkylresten, die insgesamt 1 bis 8 Kohlenstoffatome aufweisen, einzeln oder in Mischung, als Ausgangsverbindungen eingesetzt werden.

11. Polymerzusammensetzungen nach Anspruch 10,
**dadurch gekennzeichnet,**
**dass** 4-tert.-Amylcyclohexanon, 2-sek.-Butylcyclohexanon, 2-tert.-Butylcyclohexanon, 4-tert.-Butylxyclohexanon, 2-Methylcyclohexanon und/oder 3,3,5-Trimethylcyclohexanon eingesetzt werden.

12. Polymerzusammensetzungen nach mindestens einem der vorherigen Ansprüche,
**dadurch gekennzeichnet,**
**dass** Cyclohexanon, 4-tert.-Butylcyclohexanon, 3,3,5-Trimethylcyclohexanon und Heptanon, allein oder in Mischung, in der Komponente B) eingesetzt werden.

13. Polymerzusammensetzungen nach mindestens einem der vorherigen Ansprüche,
**dadurch gekennzeichnet,**
**dass** als Aldehyd-Komponente der carbonylhydrierten Keton-Aldehydharze in Komponente B) Formaldehyd, Acetaldehyd, n-Butyraldehyd und/oder iso-Butyraldehyd, Valerianaldehyd, Dodecanal, allein oder in Mischungen, eingesetzt werden.

14. Polymerzusammensetzungen nach dem vorherigen Anspruch,
**dadurch gekennzeichnet,**
**dass** Formaldehyd und/oder para-Formaldehyd und/oder Trioxan eingesetzt werden.

15. Polymerzusammensetzungen nach mindestens einem der vorherigen Ansprüche,
**dadurch gekennzeichnet,**
**dass** Carbonylhydrierungsprodukte der Harze aus Acetophenon, 4-tert.-Butylmethylketon, Cyclohexanon, 4-tert.-Butylcyclohexanon, 3,3,5-Trimethylcyclohexanon, Heptanon, allein oder in Mischung, und Formaldehyd als Komponente B) eingesetzt werden.

16. Polymerzusammensetzungen nach mindestens einem der vorherigen Ansprüche,
**dadurch gekennzeichnet,**
**dass** Diisocyanate als Komponente C) ausgewählt aus Cyclohexandiisocyanat, Methylcyclohexandiisocyanat, Ethylcyclohexandiisocyanat, Phenylendiisocyanat, Propylcyclohexandiisocyanat, Methyldiethylcyclohexandiisocyanat, Toluylendiisocyanat, Bis(isocyanatophenyl)methan, Propandiisocyanat, Butandiisocyanat, Pentandiisocyanat, Hexandiisocyanat, wie Hexamethylendiisocyanat (HDI) oder 1,5-Diisocyanato-2-methylpentan (MPDI), Heptandiisocyanat, Octandiisocyanat, Nonandiisocyanat, wie 1,6-Diisocyanato-2,4,4-trimethylhexan oder 1,6-Diisocyanato-2,2,4-trimethylhexan (TMDI), Nonantriisocyanat, wie 4-Isocyanatomethyl-1,8-octandiisocyanat (TIN), Dekandi- und triisocyanat, Undekandi- und -triisocyanat, Dodecandi- und -triisocyanate, Isophorondiisocyanat (IPDI), Bis(isocyanatomethylcyclohexyl)methan (H₁₂MDI), Isocyanatomethylmethylcyclohexyl-isocyanat, 2,5(2,6)-Bis(isocyanato-methyl)bicyclo-[2.2.1]heptan (NBDI), 1,3-Bis(isocyanatomethyl)cyclohexan (1,3-H₆-XDI) oder 1,4-Bis(isocyanatomethyl)cyclohexan (1,4-H₆-XDI), allein oder in Mischungen, eingesetzt werden.

17. Polymerzusammensetzungen nach mindestens einem der vorherigen Ansprüche,
**dadurch gekennzeichnet,**
**dass** Polyisocyanate, hergestellt durch Dimerisierung, Trimerisierung, Allophanatisierung, Biuretisierung und/oder Urethanisierung einfacher Diisocyanate, als Komponente C) eingesetzt werden.

18. Polymerzusammensetzungen nach mindestens einem der vorherigen Ansprüche,
**dadurch gekennzeichnet,**
**dass** als Komponente C) Isocyanate auf Basis von IPDI, TMDI, H₁₂MDI und/oder HDI eingesetzt werden.

19. Polymerzusammensetzungen nach mindestens einem der vorherigen Ansprüche,
**dadurch gekennzeichnet,**
**dass** 1 mol des carbonylhydrierten Keton-Aldehydharzes bezogen auf Mₙ, und 0,2 bis 15 mol, bevorzugt 0,25 bis 10 mol, besonders 0,3 bis 4 mol der Komponente C) eingesetzt werden.

20. Polymerzusammensetzungen nach mindestens einem der vorherigen Ansprüche,
**dadurch gekennzeichnet,**
**dass** der Massenanteil des Umsetzungsproduktes aus den Komponenten B) und C) zwischen 99 und 1 %, bevorzugt zwischen 90 und 20 % und besonders bevorzugt zwischen 80 und 25 % liegt.

21. Polymerzusammensetzungen nach mindestens einem der vorherigen Ansprüche,
**dadurch gekennzeichnet,**
**dass** der Schmelzbereich des Umsetzungsproduktes von B) und C) oberhalb von 140 °C, bevorzugt oberhalb von 145 °C, besonders bevorzugt oberhalb von 150 °C liegt.

22. Verfahren zur Herstellung von Polymerzusammensetzungen, im Wesentlichen enthaltend
A) mindestens ein strahlenreaktives Lösemittel
und das Umsetzungsprodukt mit einem Schmelzbereich oberhalb von 140 °C von
B) mindestens einem carbonylhydrierten Keton-Aldehydharz
mit
C) mindestens einem aromatischen, aliphatischen und/oder cycloaliphatischen Di- oder
Polyisocyanat
und gegebenenfalls
D) mindestens einem weiteren hydroxyfunktionalisierten Polymer,
durch Umsetzung von B) mit C) in A), bei Temperaturen von 20 bis 150 °C.

23. Verfahren zur Herstellung von Polymerzusammensetzungen nach Anspruch 22,
**dadurch gekennzeichnet,**
**dass** ein Katalysator eingesetzt wird.

24. Verfahren zur Herstellung von Polymerzusammensetzungen nach mindestens einem der Ansprüche 22 bis 23,
**dadurch gekennzeichnet,**
**dass** zu der Lösung der Keton-Aldehydharze B) in A) die Komponente C), gegebenenfalls in Anwesenheit eines geeigneten Katalysators, zugegeben wird.

25. Verfahren zur Herstellung von Polymerzusammensetzungen nach mindestens einem der Ansprüche 22 bis 24,
**dadurch gekennzeichnet,**
**dass** zu der Lösung der Keton-Aldehydharze B) in A) und dem hydroxyfunktionellen Polymer D) die Komponente C), gegebenenfalls in Anwesenheit eines geeigneten Katalysators, zugegeben wird.

26. Verfahren zur Herstellung von Polymerzusammensetzungen von hochschmelzenden Harzen nach mindestens einem der Ansprüche 22 bis 25,
**dadurch gekennzeichnet,**
**dass** bei Temperaturen zwischen 30 und 150 °C, bevorzugt zwischen 50 und 140 °C, umgesetzt wird.

27. Verfahren zur Herstellung von Polymerzusammensetzungen nach mindestens einem der vorherigen Ansprüche 22-26,
**dadurch gekennzeichnet,**
**dass** als hydroxyfunktionalisierte Polymere D) Polyether, Polyester, Polyacrylate und/oder nicht hydrierte und/oder kernhydrierte Phenol-Aldehydharze eingesetzt werden.

28. Verfahren zur Herstellung von Polymerzusammensetzungen nach mindestens einem der vorherigen Ansprüche 22-27,
wobei Mischungen aus den Polymeren D) und den Keton-Aldehydharzen B) polymeranalog mit Komponente C) umgesetzt werden.

29. Verwendung der Polymerzusammensetzungen nach mindestens einem der Ansprüche 1 bis 21,
als Hauptkomponente, Basiskomponente oder Zusatzkomponente in Beschichtungsstoffen, Klebstoffen, Druckfarben und Tinten, Polituren, Lasuren, Pigmentpasten, Spachtelmassen, Kosmetikartikeln und/oder Dicht- und Dämmstoffen.

30. Verwendung der Polymerzusammensetzungen nach mindestens einem der Ansprüche 1 bis 21,
als Hauptkomponente, Basiskomponente oder Zusatzkomponente in strahlungshärtenden Beschichtungsstoffen, Klebstoffen, Druckfarben und Tinten, Polituren, Lasuren, Pigmentpasten, Spachtelmassen, Kosmetikartikeln und/oder Dicht- und Dämmstoffen.

31. Verwendung gemäß Anspruch 30
zur Verbesserung der Haftungseigenschaften und der Härte.

## Claims

1. Polymer compositions essentially comprising
A) at least one radiation-reactive solvent and the reaction product, with a melting range of more than 140°C, of
B) at least one carbonyl-hydrogenated ketone-aldehyde resin
with
C) at least one aromatic, aliphatic and/or cycloaliphatic diisocyanate or polyisocyanate.

2. Polymer compositions according to Claim 1, **characterized in that**
compounds containing unsaturated moieties are used as component A).

3. Polymer compositions according to at least one of the preceding claims,
**characterized in that**
acrylic acid and/or methacrylic acid, C₁-C₄₀ alkyl esters and/or cycloalkyl esters of methacrylic acid and/or acrylic acid, glycidyl methacrylate, glycidyl acrylate, 1,2-epoxybutyl acrylate, 1,2-epoxybutyl methacrylate, 2,3-epoxycyclopentyl acrylate, 2,3-epoxycyclopentyl methacrylate and also the analogous amides and/or styrene and/or their derivatives, alone or in mixtures, are present as component A).

4. Polymer compositions according to at least one of the preceding claims,
**characterized in that**
phenoxyethyl acrylate, ethoxyethoxyethyl acrylate, isodecyl acrylate and isobornyl acrylate, alone or in mixtures, are present as component A).

5. Polymer compositions according to at least one of the preceding claims,
**characterized in that** di-, tri- and/or tetra-acrylates and their methacrylate analogs, alone or in mixtures, are present as component A).

6. Polymer compositions according to Claim 5, **characterized in that**
di-, tri- and/or tetra-acrylates and their methacrylate analogs of ethylene glycol, 1,2- and 1,3-propanediol, diethylene glycol, dipropylene and tripropylene glycol, triethylene glycol, tetraethylene glycol, 1,2- and 1,4-butanediol, 1 , 3-butylethylpropanediol, 1,3-methylpropanediol, 1,5-pentanediol, 1,4-bis(hydroxymethyl)cyclohexane (cyclohexanedimethanol), glycerol, hexanediol, neopentyl glycol, trimethylolethane, trimethylolpropane, pentaerythritol, bisphenol A, B, C, F, norbornylene glycol, 1,4-benzyldimethanol and -ethanol, 2,4-dimethyl-2-ethylhexane-1,3-diol, 1,4- and 2,3-butylene glycol, di-β-hydroxyethylbutanediol, 1, 5-pentanediol, 1,6-hexanediol, 1,8-octanediol, decanediol, dodecanediol, cyclohexanediol, trimethylolpropane, 3(4),8(9)-bis (hydroxymethyl) tricyclo [5.2.1*.*0^{2,6}]decane (Dicidol), 2,2-bis(4-hydroxycyclohexyl)propane, 2,2-bis[4-(β-hydroxyethoxy)phenyl]propane, 2-methylpropane-1,3-diol, 2-methylpentane-1,5-diol, 2,2,4(2,4,4)-trimethylhexane-1,6-diol, hexane-1,2,6-triol, butane-1,2,4-triol, tris(β-hydroxyethyl)isocyanurate, mannitol, sorbitol, polypropylene glycols, polybutylene glycols, xylylene glycol or neopentyl glycol hydroxypivalate, alone or in mixtures, are present as component A).

7. Polymer compositions according to at least one of Claims 5 and 6,
**characterized in that**
dipropylene and/or tripropylene glycol diacrylate, hexanediol diacrylate, trimethylolpropane triacrylate, alone or in a mixture, are present.

8. Polymer compositions according to at least one of the preceding claims,
**characterized in that**
C-H-acidic ketones are used in component B).

9. Polymer compositions according to at least one of the preceding claims,
**characterized in that**
ketones selected from acetone, acetophenone, 4-tert-butyl methyl ketone, methyl ethyl ketone, heptan-2-one, pentan-3-one, methyl isobutyl ketone, cyclopentanone, cyclododecanone, mixtures of 2,2,4- and 2,4,4-trimethylcyclopentanone, cycloheptanone, cyclooctanone, cyclohexanone, alone or in mixtures, are used as starting compounds in the carbonyl-hydrogenated ketone-aldehyde resins of component B).

10. Polymer compositions according to at least one of the preceding claims,
**characterized in that**
alkyl-substituted cyclohexanones having one or more alkyl radicals containing in total 1 to 8 carbon atoms, individually or in a mixture, are used as starting compounds in the carbonyl-hydrogenated ketone-aldehyde resins of component B).

11. Polymer compositions according to Claim 10, **characterized in that**
4-tert-amylcyclohexanone, 2-sec-butylcyclohexanone, 2-tert-butylcyclohexanone, 4-tert-butylcyclohexanone, 2-methylcyclohexanone and/or 3,3,5-trimethylcyclohexanone are used.

12. Polymer compositions according to at least one of the preceding claims,
**characterized in that**
cyclohexanone, 4-tert-butylcyclohexanone, 3,3,5-trimethylcyclohexanone and heptanone, alone or in a mixture, are used in component B).

13. Polymer compositions according to at least one of the preceding claims,
**characterized in that**
formaldehyde, acetaldehyde, n-butyraldehyde and/or isobutyraldehyde, valeraldehyde, dodecanal, alone or in mixtures, are used as aldehyde component of the carbonyl-hydrogenated ketone-aldehyde resins in component B).

14. Polymer compositions according to the preceding claim,
**characterized in that**
formaldehyde and/or para-formaldehyde and/or trioxane are used.

15. Polymer compositions according to at least one of the preceding claims,
**characterized in that**
carbonyl hydrogenation products of the resins of acetophenone, 4-tert-butyl methyl ketone, cyclohexanone, 4-tert-butylcyclohexanone, 3,3,5-trimethylcyclohexanone, heptanone, alone or in a mixture, and formaldehyde are used as component B).

16. Polymer compositions according to at least one of the preceding claims,
**characterized in that**
diisocyanates as component C) selected from cyclohexane diisocyanate, methylcyclohexane diisocyanate, ethylcyclohexane diisocyanate, phenylene diisocyanate, propylcyclohexane diisocyanate, methyldiethylcyclohexane diisocyanate, toluylene diisocyanate, bis(isocyanatophenyl)methane, propane diisocyanate, butane diisocyanate, pentane diisocyanate, hexane diisocyanate, such as hexamethylene diisocyanate (HDI) or 1,5-diisocyanato-2-methylpentane (MPDI), heptane diisocyanate, octane diisocyanate, nonane diisocyanate, such as 1,6-diisocyanato-2,4,4-trimethylhexane or 1,6-diisocyanato-2,2,4-trimethylhexane (TMDI), nonane triisocyanate, such as 4-isocyanatomethyl-1,8-octane diisocyanate (TIN), decane di- and tri-isocyanate, undecane di- and tri-isocyanate, dodecane di- and tri-isocyanate, isophorone diisocyanate (IPDI), bis (isocyanatomethylcyclohexyl)methane (H₁₂MDI) , isocyanatomethylmethylcyclohexyl isocyanate, 2,5(2,6)-bis (isocyanatomethyl)bicyclo[2.2.1]heptane (NBDI), 1,3-bis(isocyanatomethyl)cyclohexane (1,3-H₆-XDI) or 1,4-bis(isocyanatomethyl)cyclohexane (1,4-H₆-XDI), alone or in mixtures, are used.

17. Polymer compositions according to at least one of the preceding claims,
**characterized in that**
polyisocyanates prepared by dimerizing, trimerizing, allophanatizing, biuretizing and/or urethanizing simple diisocyanates are used as component C).

18. Polymer compositions according to at least one of the preceding claims,
**characterized in that**
isocyanates based on IPDI, TMDI, H₁₂MDI and/or HDI are used as component C).

19. Polymer compositions according to at least one of the preceding claims,
**characterized in that** 1 mol of the carbonyl-hydrogenated ketone-aldehyde resin, based on Mₙ, and from 0.2 to 15 mol, preferably from 0.25 to 10 mol, especially from 0.3 to 4 mol, of component C) are used.

20. Polymer compositions according to at least one of the preceding claims,
**characterized in that**
the mass fraction of the reaction product of components B) and C) is between 99 and 1%, preferably between 90 and 20% and more preferably between 80 and 25%.

21. Polymer compositions according to at least one of the preceding claims,
**characterized in that**
the melting range of the reaction product of B) and C) is more than 140°C, preferably more than 145°C, more preferably more than 150°C.

22. Process for preparing polymer compositions essentially comprising
A) at least one radiation-reactive solvent and the reaction product, with a melting range of more than 140°C, of
B) at least one carbonyl-hydrogenated ketone-aldehyde resins
with
C) at least one aromatic, aliphatic and/or cycloaliphatic diisocyanate or polyisocyanate
and optionally
D) at least one further hydroxy-functionalized polymer,
by reacting B) and C) in A) at temperatures from 20 to 150°C.

23. Process for preparing polymer compositions according to Claim 22,
**characterized in that**
a catalyst is used.

24. Process for preparing polymer compositions according to at least one of Claims 22 and 23,
**characterized in that**
component C), optionally in the presence of a suitable catalyst, is added to the solution of the ketone-aldehyde resins B) in A).

25. Process for preparing polymer compositions according to at least one of Claims 22 to 24,
**characterized in that**
component C), optionally in the presence of a suitable catalyst, is added to the solution of the ketone-aldehyde resins B) in A) and the hydroxy-functional polymer D).

26. Process for preparing polymer compositions of high-melting resins according to at least one of Claims 22 to 25,
**characterized in that**
reaction is carried out at temperatures between 30 and 150°C, preferably between 50 and 140°C.

27. Process for preparing polymer compositions according to at least one of the preceding Claims 22-26,
**characterized in that**
polyethers, polyesters, polyacrylates and/or non-hydrogenated and/or ring-hydrogenated phenol-aldehyde resins are used as hydroxy-functionalized polymers D).

28. Process for preparing polymer compositions according to at least one of the preceding Claims 22-27,
wherein mixtures of the polymers D) and the ketone-aldehyde resins B) are reacted polymer analogously with component C).

29. Use of the polymer compositions according to at least one of Claims 1 to 21,
as a main component, base component or additional component in coating materials, adhesives, inks, including printing inks, polishes, varnishes, pigment pastes, filling compounds, cosmetic articles and/or sealants and insulants.

30. Use of the polymer compositions according to at least one of Claims 1 to 21,
as a main component, base component or additional component in radiation-curing coating materials, adhesives, inks, including printing inks, polishes, varnishes, pigment pastes, filling compounds, cosmetic articles and/or sealants and insulants.

31. Use according to Claim 30
for improving the adhesion properties and the hardness.

## Revendications

1. Compositions polymères, contenant essentiellement
A) au moins un solvant réactif avec un rayonnement et le produit de transformation, présentant une plage de fusion supérieure à 140°C,
B) d' au moins une résine cétone-aldéhyde carbonylhydrogénée avec
C) au moins un diisocyanate ou polyisocyanate aromatique, aliphatique et/ou cycloaliphatique.

2. Compositions polymères selon la revendication 1, **caractérisées en ce qu'**on utilise, comme composant A), des composés présentant des groupes insaturés.

3. Compositions polymères selon au moins l'une quelconque des revendications précédentes, **caractérisées en ce que** les composants A) contenus sont l'acide acrylique et/ou l'acide méthacrylique, les esters C₁-C₄₀-alkyliques et/ou les esters cycloalkyliques de l'acide méthacrylique et/ou acrylique, le méthacrylate de glycidyle, l'acrylate de glycidyle, l'acrylate de 1, 2-époxybutyle, le méthacrylate de 1,2-époxybutyle, l'acrylate de 2,3-époxycyclopentyle, le méthacrylate de 2,3-époxycyclopentyle ainsi que les amides analogues et/ou le styrène et/ou leurs dérivés, seuls ou en mélange.

4. Compositions polymères selon au moins l'une quelconque des revendications précédentes, **caractérisées en ce que** les composants A) contenus sont l'acrylate de phénoxyéthyle, l'acrylate d'éthoxyéthoxyéthyle, l'acrylate d'isodécyle et l'acrylate d'isobornyle, seuls ou en mélange.

5. Compositions polymères selon au moins l'une quelconque des revendications précédentes, **caractérisées en ce que** les composants A) contenus sont les diacrylates, les triacrylates et/ou les tétraacrylates et leurs analogues de méthacrylate, seuls ou en mélange.

6. Compositions polymères selon la revendication 5, **caractérisées en ce que** les composants A) contenus sont les diacrylates, les triacrylates et/ou les tétraacrylates et leurs analogues de méthacrylate d'éthylèneglycol, de 1,2-propanediol, de 1,3-propanediol, de diéthylèneglycol, de dipropylèneglycol et de tripropylèneglycol, de triéthylèneglycol, de tétraéthylèneglycol, de 1,2-butanediol, de 1,4-butanediol, d e 1, 3-butyléthylpropanediol, de 1,3-méthylpropanediol, de 1,5-pentanediol, de bis-(1,4-hydroxyméthyl)cyclohexane (cyclohexanediméthanol), de glycérol, d'hexanediol, de néopentylglycol, de triméthyloléthane, de triméthylolpropane, de pentaérythritol, de bisphénol A, B, C, F, de norbornylèneglycol, de 1,4-benzyldiméthanol, de 1,4-benzyldiéthanol, de 2 , 4-diméthyl-2-éthylhexane-1,3-diol, de 1,4-butylèneglycol et de 2,3-butylèneglycol, de di-β -hydroxyéthylbutanediol, de 1,5-pentanediol, de 1,6-hexanediol, de 1,8-octanediol, de décanediol, de dodécanediol, de cyclohexanediol, de triméthylolpropane, de 3(4), 8(9)-bis (hydroxyméthyl) - tricyclo [5.2.1.0^{2,6}] décane (Dicidol), de 2,2-bis-(4-hydroxycyclohexyl) propane, de 2, 2-bis-[4-(β-hydroxyéthoxy)phényl propane, de 2-méthylpropanediol-1,3, de 2-méthylpentanediol-1,5, de 2, 2, 4 (2, 4, 4) - triméthylhexanediol-1,6, d'hexanetriol-1,2,6, de butanetriol-1, 2, 4, detris-(β-hydroxyéthyl)isocyanurate, de mannitol, de sorbitol, de polypropylèneglycols, de polybutylèneglycols, de xylylèneglycol ou de l'ester néopentylglycolique de l'acide hydroxypivalique, seuls ou en mélange.

7. Compositions polymères selon au moins l'une quelconque des revendications 5 ou 6, **caractérisées en ce qu'**elles contiennent du diacrylate de dipropylèneglycol et/ou du diacrylate de tripropylèneglycol, du diacrylate d'hexanediol, du triacrylate de triméthylolpropane, seuls ou en mélange.

8. Compositions polymères selon au moins l'une quelconque des revendications précédentes, **caractérisées en ce qu'**on utilise des cétones C-H-acides dans le composant B).

9. Compositions polymères selon au moins l'une quelconque des revendications précédentes, **caractérisées en ce qu'**on utilise, dans les résines cétone-aldéhyde carbonylhydrogénées du composant B), des cétones choisies parmi l'acétone, l'acétophénone, l a 4-tert-butylméthylcétone, la méthyléthylcétone, l'heptanone-2, la pentanone-3, la méthylisobutylcétone, la cyclopentanone, la cyclododécanone, les mélanges de 2,2,4-triméthylcyclopentanone et de 2,4,4-triméthylcyclopentanone, la cycloheptanone, la cyclooctanone, la cyclohexanone, seules ou en mélange, comme composés de départ.

10. Compositions polymères selon au moins l'une quelconque des revendications précédentes, **caractérisées en ce qu'**on utilise, dans les résines de cétone-aldéhyde carbonylhydrogénées du composant B), des cyclohexanones substituées par alkyle avec un ou plusieurs radicaux alkyle, qui présentent au total 1 à 8 atomes de carbone, seuls ou en mélange, comme composés de départ.

11. Compositions polymères selon la revendication 10, **caractérisées en ce qu'**on utilise de la 4-tert-amylcyclohexanone, de la 2-sec-butylcyclohexanone, de la 2-tert-butylcyclohexanone, de la 4-tert-butylcyclohexanone, de la 2-méthylcyclohexanone et/ou de la 3,3,5-triméthylcyclohexanone.

12. Compositions polymères selon au moins l'une quelconque des revendications précédentes, **caractérisées en ce qu'**on utilise de la cyclohexanone, de la 4-tert-butylcyclohexanone, de la 3,3,5-triméthylcyclohexanone, de l'heptanone, seules ou en mélange dans le composant B).

13. Compositions polymères selon au moins l'une quelconque des revendications précédentes, **caractérisées en ce qu'**on utilise, comme composant aldéhyde des résines cétone-aldéhyde carbonylhydrogénées dans le composant B), du formaldéhyde, de l'acétaldéhyde, du n-butyraldéhyde et/ou de l'isobutyraldéhyde, du valérianaldéhyde, du dodécanal, seuls ou dans des mélanges.

14. Compositions polymères selon la revendication précédente, **caractérisées en ce qu'**on utilise du formaldéhyde et/ou du paraformaldéhyde et/ou du trioxane.

15. Compositions polymères selon au moins l'une quelconque des revendications précédentes, **caractérisées en ce qu'**on utilise des produits de carbonyl-hydrogénation des résines d'acétophénone, de 4-tert-butylméthylcétone, de cyclohexanone, de 4-tert-butylcyclohexanone, de 3,3,5-triméthylcyclohexanone, d'heptanone, seules ou en mélange et de formaldéhyde comme composant B).

16. Compositions polymères selon au moins l'une quelconque des revendications précédentes, **caractérisées en ce qu'**on utilise, comme composant C), des diisocyanates choisis parmi le cyclohexanediisocyanate, le méthylcyclohexanediisocyanate, l'éthylcyclohexanediisocyanate, le phénylènediisocyanate, le propylcyclohexanediisocyanate, le méthyldiéthylcyclohexanediisocyanate, le toluylènediisocyanate, le bis(isocyanatophényl)méthane, le propanediisocyanate, le butanediisocyanate, le pentanediisocyanate, l'hexanediisocyanate, tel que l'hexaméthylènediisocyanate (HDI) ou le 1,5-diisocyanato-2-méthylpentane (MPDI), l'heptanediisocyanate, l'octanediisocyanate, le nonanediisocyanate, tel que le 1,6-diisocyanato-2,4,4-triméthylhexane ou le 1,6-diisocyanato-2,2,4-triméthylhexane (TDMI), le nonanetriisocyanate, tel que le 4-isocyanatométhyl-1,8-octanediisocyanate (TIN), le décanediisocyanate et le décanetriisocyanate, l'undécanediisocyanate et l'undécanetriisocyanate, les dodécanediisocyanates et les dodécanetriisocyanates, l'isophoronediisocyanate (IPDI), le bis(isocyanatométhylcyclohexyl)méthane (H₁₂MDI), l'isocyanatométhylméthylcyclohexylisocyanate, le 2,5(2,6)-bis(isocyanatométhyl)bicyclo-[2,2,1]heptane (NBDI), le 1,3-bis(isocyanatométhyl)cyclohexane (1,3-H₆₋XDI) ou le 1,4-bis(isocyanatométhyl)cyclohexane (1,4-H₆-XDI), seuls ou en mélange.

17. Compositions polymères selon au moins l'une quelconque des revendications précédentes, **caractérisées en ce qu'**on utilise des polyisocyanates, préparés par dimérisation, trimérisation, allophanatisation, biurétisation et/ou uréthanisation de diisocyanates simples, comme composant C).

18. Compositions polymères selon au moins l'une quelconque des revendications précédentes, **caractérisées en ce qu'**on utilise, comme composant C), des isocyanates à base d'IPDI, de TMDI, d'H₁₂MDI et/ou d'HDI.

19. Compositions polymères selon au moins l'une quelconque des revendications précédentes, **caractérisées en ce qu'**on utilise 1 mole de la résine cétone-aldéhyde carbonylhydrogénée, par rapport à Mₙ, et 0,2 à 15 moles, de préférence 0,25 à 10 moles, en particulier 0,3 à 4 moles du composant C).

20. Compositions polymères selon au moins l'une quelconque des revendications précédentes, **caractérisées en ce que** la proportion massique du produit de transformation des composants B) et C) est située entre 99 et 1%, de préférence entre 90 et 20% et de manière particulièrement préférée entre 80 et 25%.

21. Compositions polymères selon au moins l'une quelconque des revendications précédentes, **caractérisées en ce que** la plage de fusion du produit de transformation de B) et C) est supérieure à 140°C, de préférence supérieure à 145°C, de manière particulièrement préférée supérieure à 150°C.

22. Procédé pour la préparation de compositions polymères, contenant essentiellement
A) au moins un solvant réactif avec un rayonnement et le produit de transformation, présentant une plage de fusion supérieure à 140°C,
B) d' au moins une résine cétone-aldéhyde carbonylhydrogénée avec
C) au moins un diisocyanate ou polyisocyanate aromatique, aliphatique et/ou cycloaliphatique et le cas échéant
D) au moins un autre polymère à fonctionnalité hydroxy, par transformation de B) avec C) dans A), à des températures de 20 à 150°C.

23. Procédé pour la préparation de compositions polymères selon la revendication 22, **caractérisé en ce qu'**on utilise un catalyseur.

24. Procédé pour la préparation de compositions polymères selon au moins l'une quelconque des revendications 22 à 23, **caractérisé en ce qu'**on ajoute le composant C) à la solution de la résine cétone-aldéhyde B) dans A), le cas échéant en présence d'un catalyseur approprié.

25. Procédé pour la préparation de compositions polymères selon au moins l'une quelconque des revendications 22 à 24, **caractérisé en ce qu'**on ajoute le composant C) à la solution de la résine cétone-aldéhyde B) dans A) et du polymère D) à fonctionnalité hydroxy, le cas échéant en présence d'un catalyseur approprié.

26. Procédé pour la préparation de compositions polymères de résines à point de fusion élevé selon au moins l'une quelconque des revendications 22 à 25, **caractérisé en ce qu'**on transforme à des températures entre 30°C et 150°C, de préférence entre 50°C et 140°C.

27. Procédé pour la préparation de compositions polymères selon au moins l'une quelconque des revendications précédentes 22 à 26, **caractérisé en ce qu'**on utilise comme polymères à fonctionnalisation hydroxy D) des polyéthers, des polyesters, des polyacrylates et/ou des résines de phénol-aldéhyde hydrogénées et/ou à noyau hydrogéné.

28. Procédé pour la préparation de compositions polymères selon au moins l'une quelconque des revendications précédentes 22-27, où on transforme des mélanges des polymères D) et des résines de cétone-aldéhyde B) de manière analogue à un polymère avec le composant C).

29. Utilisation des compositions polymères selon au moins l'une quelconque des revendications 1 à 21, comme composant principal, composant de base ou composant supplémentaire dans des substances de revêtement, des adhésifs, des encres d'imprimerie et des teintures, des agents de polissage, des lasures, des pâtes pigmentaires, des masses de bouchage, des objets cosmétiques et/ou des substances d'étanchéité et des isolants.

30. Utilisation des compositions polymères selon au moins l'une quelconque des revendications 1 à 21, comme composant principal, composant de base ou composant supplémentaire dans des substances de revêtement, des adhésifs, des encres d'imprimerie et des teintures, des agents de polissage, des lasures, des pâtes pigmentaires, des masses de bouchage, des objets cosmétiques et/ou des substances d'étanchéité et des isolants durcissant sous l'effet d'un rayonnement.

31. Utilisation selon la revendication 30 pour améliorer les propriétés adhésives et la dureté.
